# EUROPEAN PATENT SPECIFICATION

(11) **EP 1 269 444 B1**
(45) Date of publication and mention of the grant of the patent: **09.02.2005**
(21) Application number: 01915483.0
(22) Date of filing: 23.03.2001
(51) Int. Cl.: G08C 23/04, G08C 17/02

(54) **REMOTE CONTROL INTERFACE FOR CONVERTING RADIO REMOTE CONTROL SIGNALS INTO INFRARED REMOTE CONTROL SIGNALS**
FERNSTEUERSCHNITTSTELLE ZUR UMSETZUNG VON FUNKFERNSTEUERSIGNALEN IN INFRAROTFERNSTEUERSIGNALEN
INTERFACE DE TELECOMMANDE PERMETTANT DE CONVERTIR DES SIGNAUX DE TELECOMMANDE RADIO EN SIGNAUX DE TELECOMMANDE INFRAROUGE

(30) Priority: 24.03.2000 GB 0007242
(43) Date of publication of application: 02.01.2003
(73) Proprietor: Tvcompass Limited, London WC2E 9RZ (GB)
(72) Inventor: FERRIS, Gavin, London N19 5LT (GB)
(74) Representative: Langley, Peter James
(86) International application number: PCT/GB2001/001306
(87) International publication number: WO 2001/073720

(56) References cited:
- WO-A-99/41876
- US-A- 5 963 624

## Description

### Field of the Invention

The present invention relates to remote control devices, and in particular to a device for providing an interface between Bluetooth enabled devices and infra-red controlled devices.

### Background

At present, many domestic entertainment devices, such as TV, Hi-fi, VCR and DVD players are controlled remotely via an infra-red link. Such devices are supplied with a dedicated remote control, but programmable remote controls to enable control of several devices from one remote control have been available for many years.

Mobile phones, and some personal digital assistants, palm computers and the like are sufficiently versatile to be used as remote control devices. The range of keys, displays and processors typically provided allow for a wide range of commands to be programmed into the phone etc. and accessed rapidly by the user. However, even when such phones, PDAs, etc. are provided with an infra-red transmitter, its range is too short and power too low for use with domestic devices. Generally the intention is to provide for data transfer between closely adjacent devices. Extender devices which allow a programmable remote control to be used throughout a house, by utilising a radio frequency link, are known. The remote control simultaneously transmits IR signals and RF signals which correspond to the IR signals. The remote control is programmed to issue the required IR command codes in the usual way for controlling a device directly or via a command centre. The command centre is positioned near the entertainment device. It receives the RF signals and transmits the corresponding IR signal to the entertainment device. Hence the remote control must have both IR and RF transmitters and encoders, and the remote control itself is programmed by the user to issue the required IR instruction codes.

With the advent of the Bluetooth technology or protocol, mobile phones, PDAs etc. are being equipped with Bluetooth transceivers (Bluetooth is a short range, low power, spread spectrum, data transfer system, utilising two way radio communication on the unlicensed 2.4GHz waveband). Bluetooth has been developed to facilitate communication between Bluetooth enabled devices, that is devices equipped with a Bluetooth transceiver, in the domestic or small office environment. The signal strength is intended to reach only 30 metres, effectively confining the signal to a single room, although the communication protocol minimises the risk of conflicts with the other nearby 'piconets'.

In principle, Bluetooth transceivers could be installed in domestic devices such as TVs. However, such devices are renewed less frequently by users than a typical mobile phone is, for example.

Reference may be made to US 5963624, which shows using a conventional digital cordless telephone as a remote control unit; the cordless telephone sends radio control signals to an interface unit, which in turn converts the control codes to the appropriate format infra red codes to control a television receiver. The small screen size and very limited memory of the digital cordless telephone would however prevent the telephone from storing or displaying television program listings.

### Summary of the Invention

In a first aspect, there is a remote control system for controlling a television receiver, the system composing:
(a) a hand held apparatus which is adapted to send a short range RF signal when a particular television channel is selected by a user interacting with the apparatus; and
(b) an interface device which receives the short range RF signal sent from the hand held apparatus and converts it to an infra-red control signal which, when received at the television receiver, causes the television to tune to the channel selected by the user;
wherein the hand held apparatus (a) is programmed to store and to display television programme listings and (b) is adapted to receive from the interface device a short range RF signal which informs the apparatus of the channel currently selected on the television receiver so that the programme listings appropriate to that channel can be displayed on the apparatus.

This approach has several advantages over the prior art: first, storing and displaying television program listings would clearly not be possible on the digital cordless telephone of prior art US 5963624, but it is possible on a PDA or large screen mobile telephone. Storing and displaying television program listings on the hand held apparatus makes that apparatus far more useful. Secondly, in the present invention, the interface device can give feedback to the hand held apparatus concerning the channel currently selected. This feature is entirely absent from the prior art. The interface unit could for example store the latest TV channel selection and then, when a Bluetooth enabled mobile telephone with EPG functionality entered within range, the Bluetooth enquiry made by the phone causes a piconet to be formed between the mobile telephone and the inteface unit; the interface unit informs the mobile telephone of the current channel being watched and the TV listings application on the mobile telephone automatically uses this information to show information relating to this channel. Other details are specified in the appended claims.

### Brief Description of the Drawings

The invention will be further described by way of example, with reference to the accompanying drawings, in which:
Figure 1 shows a domestic system utilising a remote control interface in accordance with the invention;
Figure 2 is a schematic system diagram for the interface of Figure 1; and

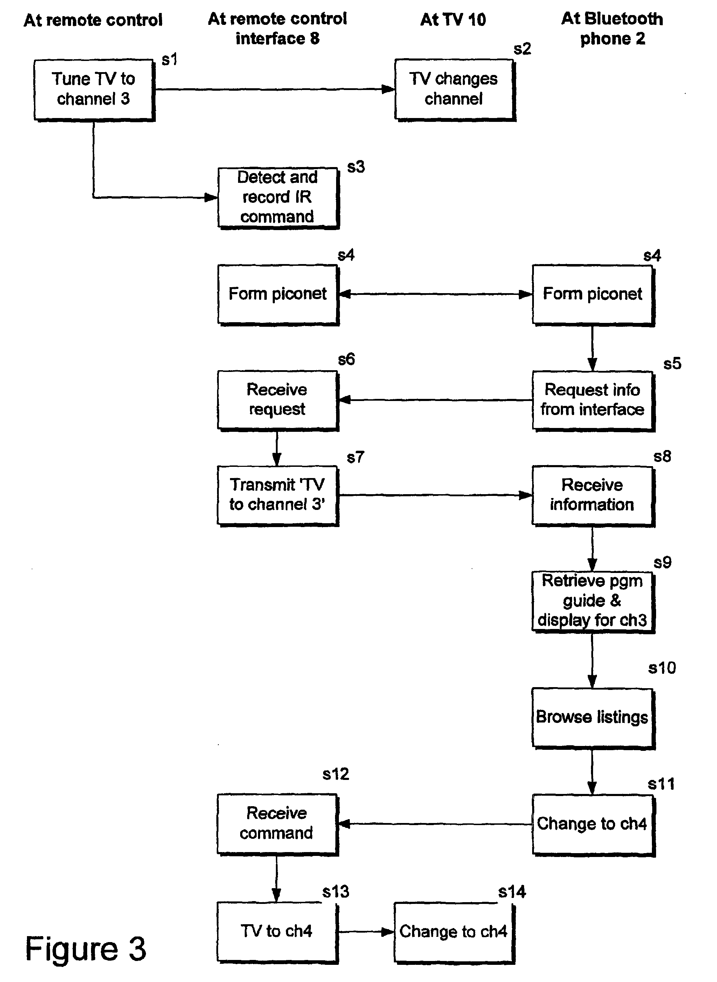

Figure 3 is a flow diagram illustrating the operation of the system according to the invention.

### Detailed Description

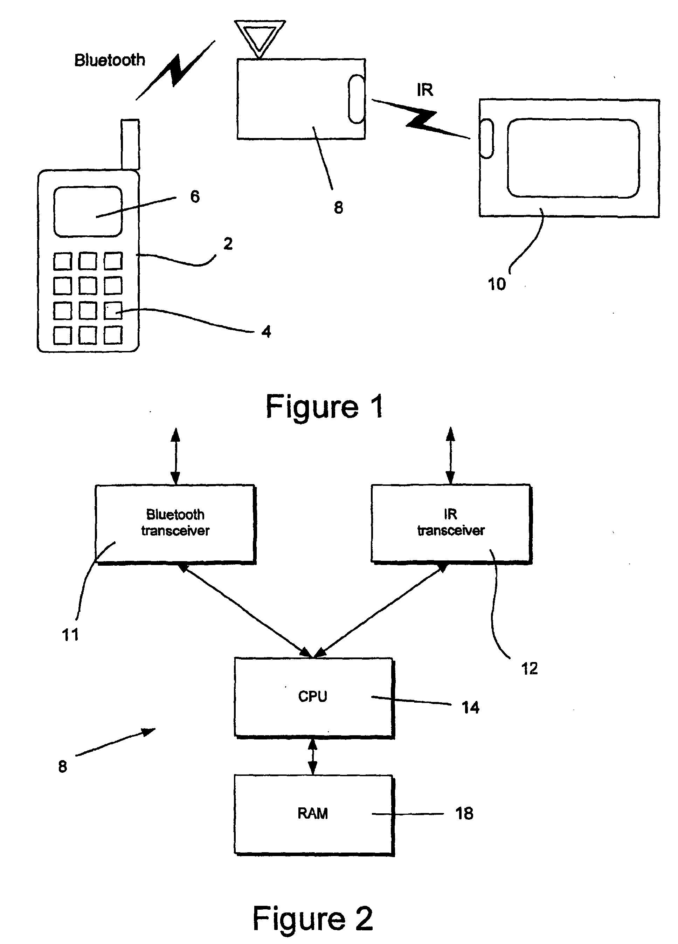

Referring to Figure 1, a mobile phone 2 has a keypad 4 and display 6. Mobile phone 2 also has a Bluetooth transceiver for transmission and receipt of commands using the Bluetooth communication channel and protocol.

The user issues commands by inputting instructions using the keypad 4, and also by use of an on-screen command menu shown on display 6. The issued commands are received by a remote control interface 8 which also has a Bluetooth transceiver. The interface 8 in turn translates the received command into an appropriate infra-red command which is transmitted to a TV 10.

Referring to Figure 2, the remote control interface 8 has a Bluetooth transceiver 11, a high power, wide area infra-red transceiver 12 and a CPU 14 for translating received 'Bluetooth commands' into transmitted 'infra-red commands' and vice versa. A non- volatile RAM 18 stores command codes and sequences which may be programmed into the device during manufacture (for example IR codes for a range of TVs, Bluetooth transmitted codes corresponding to particular key strokes), or by the user. Thus the user will configure control means in the interface to issue particular IR command codes to control the TV channel, volume, etc. on receipt of a particular command input via the mobile telephone keypad and transmitted to the interface by the Bluetooth transceiver. The interface may learn the required IR code from the standard remote control by the user activating the relevant command button on the remote and pointing it at the IR receiver in the interface.

The interface 8 may be powered by a mains supply, batteries or solar cells, for example.

The Bluetooth enabled device may carry program listings which can be displayed on the phone's display. In the case of a mobile phone these may be downloaded automatically from the communication network. Other information may be programmed in by the user or by a direct infra-red link from an entertainment device, for example the listing for discs stored in a disc player.

A typical user sequence utilising an infra-red transceiver in the interface may be as follows:
1. Mary tunes the TV 10 to channel 3 using her dedicated remote control. She is the only person currently in the room (step s1).
2. The TV senses the IR command from the dedicated remote control and changes channel (step s2). Meanwhile, the remote control interface 8 also senses the IR command, interprets it, and records the information in memory (step s3). There being no appropriate Bluetooth units in range, nothing else happens at this point.
3. John enters the room, with his Bluetooth enabled phone 2 in his pocket. The two devices 2, 8 form a Bluetooth piconet in the usual way (step s4), and then software running on the phone interrogates the module for information (step s5). The module 8 receives the information request (step s6) and in turn, passes on the 'TV:tune to channel 3' command record, via Bluetooth (step s7).
4, On receiving this information (step s8), the phone 2 retrieves (e.g.) an electronic programme guide, moves the 'current position' within the guide to the programme listings for channel 3, and displays it (step s9).
5. John takes the phone out of his pocket, and is able immediately to check the listings information (e.g.) for the current channel, without having to enter any further information.
6. Mary leaves the room, John browses the listings (step s10) and decides to view a program on channel 4 instead. He issues the command on his phone (via. e.g. a WML script call executed by the electronic programme guide WML W AP stack).
7. The command 'TV:tune to channel 4' is sent via Bluetooth from the phone 2 to the module 8 (step s11).
8. The module 8 receives the command, and stores it in memory (step s12). It also emits the appropriate IR sequence to cause the TV 10 to perform the tuning operation (step s13).
9. The TV 10 receives the IR signal and retunes (step s14).

This "command eavesdropping" mode would also be useful for applications such as audience profiling (i.e., ratings covering what channels audiences actually watch). In such a mode, the device could monitor the Bluetooth IDs of the various phones in the room, as a guide to the current audience in the room (assuming people tend to keep their phones with them, and switched on, most of the time).

Although the embodiment has been described particularly with reference to the Bluetooth communication system, other standards such as Home RF could be used.

## Claims

1. A remote control system for controlling a television receiver, the system comprising:
(a) a hand held apparatus which is adapted to send a short range RF signal when a particular television channel is selected by a user interacting with the apparatus; and
(b) an interface device which receives the short range RF signal sent from the hand held apparatus and converts it to an infra-red control signal which, when received at the television receiver, causes the television to tune to the channel selected by the user;
wherein the hand held apparatus is (a) programmed to store and to display television programme listings and (b) adapted to receive from the interface device a short range RF signal which informs the apparatus of the channel currently selected on the television receiver so that the programme listings appropriate to that channel can be displayed on the apparatus.

2. The system of any preceding claim in which the hand held apparatus also functions as a mobile telephone.

3. The system of any preceding claim in which the hand held apparatus also functions as a PDA hand held computer.

4. The system of any preceding claim in which the short range RF signal conforms to the Bluetooth or HomeRF protocols.

5. The system of any preceding claim in which the interface device is programmable using the apparatus.

6. The system of any preceding claim in which the hand held apparatus is physically connected to the interface device.

7. The system of any preceding claim in which the interface device comprises a receiver for receiving IR signals indicative of a TV channel being selected using a remote control device, a memory store for recording those signals and a transmitter for sending a short range RF signal to the handheld apparatus so that the handheld apparatus can therefore store a record of the TV channel selected and can display program listing s for that channel.

8. The system of any preceding claim in which the interface device stores a record of the television channels selected and supplies that information for audience profiling purposes.

9. The system of any preceding claim in which the interface device is capable of associating television channel selections with different hand held apparatus and can hence store audience profiling data which includes personal viewing choices.

## Patentansprüche

1. Fernbediensystem zum Bedienen eines Fernsehempfängers, wobei das System Folgendes umfasst:
(a) einen Handapparat, der ein RF-Signal kurzer Reichweite sendet, wenn ein bestimmter Fernsehkanal von einem mit dem Apparat interagierenden Benutzer gewählt wird; und
(b) ein Schnittstellengerät, das das von dem Handapparat gesendete RF-Signal kurzer Reichweite empfängt und in ein Infrarot-Steuersignal umwandelt, das, wenn es vom Fernsehempfänger empfangen wird, bewirkt, dass sich der Fernseher auf den vom Benutzer gewählten Kanal einstellt;
wobei der Handapparat (a) so programmiert ist, dass er Fernsehprogrammlisten speichert und anzeigt, und (b) die Aufgabe hat, von dem Schnittstellengerät ein RF-Signal kurzer Reichweite zu empfangen, das dem Apparat den gerade auf dem Fernsehempfänger gewählten Kanal mitteilt, so dass die für diesen Kanal zutreffenden Programmlisten auf dem Apparat angezeigt werden können.

2. System nach einem der vorherigen Ansprüche, bei dem der Handapparat auch als Mobiltelefon funktioniert.

3. System nach einem der vorherigen Ansprüche, bei dem der Handapparat auch als PDA-Handcomputer funktioniert.

4. System nach einem der vorherigen Ansprüche, bei dem das RF-Signal kurzer Reichweite den Bluetooth oder HomeRF Protokollen entspricht

5. System nach einem der vorherigen Ansprüche, bei dem das Schnittstellengerät mit dem Apparat programmiert werden kann.

6. System nach einem der vorherigen Ansprüche, bei dem der Handapparat physikalisch mit dem Schnittstellengerät verbunden ist.

7. System nach einem der vorherigen Ansprüche, bei dem das Schnittstellengerät Folgendes umfasst: einen Empfänger zum Empfangen von IR-Signalen, die einen mit einer Fernbedienung gewählten Fernsehkanal anzeigen, einen Speicher zum Aufzeichnen dieser Signale und einen Sender zum Senden eines RF-Signals kurzer Reichweite zu dem Handapparat, so dass der Handapparat einen Datensatz des gewählten Fernsehkanals speichern und Programmlisten für diesen Kanal anzeigen kann.

8. System nach einem der vorherigen Ansprüche, bei dem das Schnittstellengerät einen Datensatz der gewählten Fernsehkanäle speichert und diese Informationen zwecks Erstellung von Zuschauerprofilen zuführt.

9. System nach einem der vorherigen Ansprüche, bei dem das Schnittstellengerät Fernsehkanalselektionen mit unterschiedlichen Handapparaten assoziieren und somit Zuschauerprofildaten speichern kann, die persönliche Fernsehpräferenzen beinhalten.

## Revendications

1. Système de commande à distance pour commander un poste récepteur de télévision, le système comportant :
(a) un appareil à main qui est adapté pour transmettre un signal RF à courte portée quand une chaîne de télévision particulière est sélectionnée par un utilisateur se servant de l'appareil ; et
(b) un dispositif d'interface qui reçoit le signal RF à courte portée transmis en provenance de l'appareil à main et qui le convertit en un signal de commande infrarouge qui, quand il est reçu dans le poste récepteur de télévision, contraint la télévision à se régler sur la chaîne sélectionnée par l'utilisateur ;
dans lequel l'appareil à main est (a) programmé pour enregistrer et pour afficher les listes des programmes de télévision et (b) adapté pour recevoir en provenance du dispositif d'interface un signal RF à courte portée qui signale à l'appareil quelle est la chaîne actuellement sélectionnée sur le poste récepteur de télévision de telle manière que les listes des programmes connexes à cette chaîne puissent être affichées sur l'appareil.

2. Système selon l'une quelconque des revendications précédentes, dans lequel l'appareil à main fait également fonction de téléphone portable.

3. Système selon l'une quelconque des revendications précédentes, dans lequel l'appareil à main fait également fonction d'ordinateur à main PDA (assistant numérique personnel).

4. Système selon l'une quelconque des revendications précédentes, dans lequel le signal RF à courte portée est conforme aux protocoles Bluetooth ou HomeRF.

5. Système selon l'une quelconque des revendications précédentes, dans lequel le dispositif d'interface est programmable par le biais de l'appareil.

6. Système selon l'une quelconque des revendications précédentes, dans lequel l'appareil à main est connecté de manière physique au dispositif d'interface.

7. Système selon l'une quelconque des revendications précédentes, dans lequel le dispositif d'interface comporte un récepteur destiné à recevoir des signaux IR indicatifs de la sélection d'une chaîne de télévision par le biais d'un dispositif de commande à distance, une mémoire destinée à enregistrer ces signaux et un transmetteur destiné à transmettre un signal RF à l'appareil à main de telle manière que l'appareil à main puisse donc mémoriser un enregistrement de la chaîne de télévision sélectionnée et puisse afficher les listes des programmes pour cette chaîne.

8. Système selon l'une quelconque des revendications précédentes, dans lequel le dispositif d'interface mémorise un enregistrement des chaînes de télévision sélectionnées et fournit cette information dans le cadre de l'établissement des profils d'audience.

9. Système selon l'une quelconque des revendications précédentes, dans lequel le dispositif d'interface est capable d'associer les sélections des chaînes de télévision à différents appareils à main et peut donc mémoriser les données de profil d'audience qui comprennent les choix personnels d'écoute.
